# EUROPEAN PATENT APPLICATION

(11) **EP 2 549 419 A1**
(43) Date of publication of application: **23.01.2013**
(21) Application number: 12250006.9
(22) Date of filing: 10.01.2012
(51) Int. Cl.: G06Q 10/08

(54) **Methods and apparatus for transporting cargo**

(30) Priority: 21.07.2011 US 201113188165
(71) Applicant: First Global Xpress, LLC., New York NY 10010-6009 (US)
(72) Inventor: Brown, Justin, New York, NY 10025 (US); Visdomini, Christian, Butler, NJ 07405 (US)
(74) Representative: Beresford, Keith Denis Lewis

(57) **Abstract**

An apparatus and method of transporting cargo are disclosed. The method of providing package shipment by a package shipper includes providing options for a shipment route, including at least one portion of the shipment route being air cargo, and comprises receiving, via a communications network, from a package shipping customer at a consignee terminal, input data including at least an origin, a destination and a latest time for delivery for a package; determining, in a computing device, a first optimized list of alternative shipment routes, for shipping the package; providing the list to the customer via the communications network; receiving from the customer a selection of one of the shipment routes; and transporting the package from the origin to the destination via the selected shipment route. In alternative embodiments, the list of shipment routes is provided together with a list of a plurality of additional optimization criteria, and a selection from the customer of one of the additional optimization criteria from the list is used to prepare, in the computing device, a further optimized list of alternative shipment routes from which the customer may select a preferred shipment route. The list of optimization criteria may include at least price, time of delivery and greenness.

## Description

### Field of the Invention

The present invention relates to methods and apparatus for transporting cargo, and is concerned with resource allocation and sharing for the transportation of materials, and, more particularly, to environmentally friendly resource allocation and sharing for direct-shipping of couriered packages

### Background of the Invention

Courier services are greatly relied upon worldwide for the rapid delivery of cargo such as packages, money, documents or information. Although emerging technologies such as the Internet have provided competition for the courier services industry, the transport of cargo remains a cornerstone of modern enterprise.

The natural progression of the industry has been to seek faster delivery times than alternative methods of transporting packages, each company attempting to outdo the others. Transport methodologies have enabled courier services companies to offer next-day or overnight delivery services, regardless of geopolitical and other boundaries. Some services ship on their own aircraft, while others utilize the unused baggage allowances of airline passengers to transport their packages on flights organised by commercial carriers. These methodologies, however, have hitherto failed to consider a specific, yet important element: the ecological expense of transporting packages faster. For purposes of this application, "packages" will be understood to mean those items traditionally shipped by air cargo or air freight by courier service providing companies such as FedEx^{®} Corporation ("FedEx"), including boxes of various shapes and sizes and also substantially flat packages that may be considered more envelopes than packages, but are nevertheless considered as "packages" in the present application.

The use of company-owned aircraft for courier services was derived from a consolidation model, based on the hub and spoke distribution paradigm pioneered by Delta Airlines Incorporated in 1955. In the 1970s, FedEx adapted the hub and spoke system after the airline industry deregulated in 1978. The paradigm was subsequently utilized by other commercial carriers. This model allows for the consolidation and redistribution of packages at the hub, with a generally smaller number of routes to ensure more efficient use of transportation.

Aircraft are more likely to fly at full capacity and fly more frequently throughout the day. Distributing packages through a hub, however, raises serious concerns for the consumer and the courier service. On the one hand, the hub can present itself as a single point of failure, meaning that if there are delays at the hub, all routes and deliveries are delayed. For the courier service, hubs tend to be wasteful and inefficient, when compared to direct shipping (i.e., shipping directly from a point of origin to a destination without routing the package through a hub). Most concerning are the stabilization measures that may impose taxation on higher energy-using industries, regardless of efforts to reward greener or more energy efficient models. The direct-shipping model may offer up to a 30% reduction of air transport emissions, and can also be less expensive and faster than the hub and spoke distribution paradigm.

Currently, courier services that utilize commercial aircraft, rather than their own, exploit the available cargo space on passenger flights to provide the direct shipment of goods, thereby utilizing more efficiently the air transport system, without increasing the greenhouse gas emissions typically produced by the air transport industry. The greatest consideration made when shipping in this way is to ensure that shipments are made via commercial airliners - not on a corporate fleet - and assumes that as long as an aircraft is in motion, utilizing available space will reduce the aircraft's carbon footprint (e.g., by one example of measurement involving the ratio of the weight of greenhouse gas emitted per weight of cargo carried).

Studies have indicated that when any aircraft has available cargo space, greenhouse gas emissions may be reduced, at least while the flight is in motion if arrangements can be made for couriers to occupy the available space, regardless of variables such as weight and distribution of couriered packages. In so doing, the aircraft's carbon footprint would also decrease, thereby achieving marginal improvement in the ecological efficiency of the air transport system (i.e., carrying marginally more weight in couriered packages without increasing the greenhouse gas emissions produced by the aircraft). That is, ignoring the marginal increase in fuel that may be utilized in the flight, due to increased cargo weight, and assuming the flight would go from an origin to a destination in any event, the cargo in the form of a relatively small and light weight addition from the courier shipment to the passenger baggage being carried, would be a "carbon footprint free" cargo weight addition.

### Summary of the Invention

One aspect of the present invention provides an apparatus for transporting cargo from an origin to a destination, the apparatus including a consignee data input device, shipping route calculating means, a communications network linking said consignee data input device and said shipping route calculating means, and transportation means directable by said shipping route calculating means for transporting cargo along a shipping route;
wherein the consignee data input device comprises:
means for sending to the shipping route calculating means, via the communications network, cargo shipment data representing at least an origin, a destination and a time for delivery;
means for receiving calculated shipment routes and additional preference criteria from the shipping route calculating means, via the communications network; and
means for indicating a selection of an additional preference criterion or of a shipment route to the shipping route calculating means, via the communications network;
wherein the shipping route calculating means comprises:
a memory storing data representing:
   a plurality of shipment routes, including at least one portion of a shipment route representing shipment by air cargo;
   a shipping criterion representative of transportation efficiency; and
   a plurality of additional preference criteria;
means for receiving cargo shipment data representing at least an origin, a destination and a time for delivery from the consignee; and
processing means operable to:
   retrieve data from said memory and to calculate a first list of alternative shipment routes from the origin to the destination on the basis of the shipping criterion;
   provide to the consignee device, via the communications network, the first list of alternative shipment routes and said plurality of additional preference criteria;
receive from the consignee data input device, via the communications network, a first selection of either:
   a shipment route from said first list, or
   one of the additional preference criteria;
when the first selection is a shipment route, to direct the transportation means to transport the cargo from the origin to the destination in accordance with the selected shipment route;
when the first selection is a selection of one of the additional preference criteria, to:
   determine a second list of alternative shipment routes for transporting the package from the origin to the destination on the basis of at least the selected additional preference criterion;
   provide to the consignee data input device, via the communications network, said second list of alternative shipment routes;
   receive from the consignee data input device, via the communications network, a selection of either:
      a shipment route from said second list, or
      one of the additional preference criteria; and
when the second selection is a shipment route, to direct the transportation means to transport the cargo from the origin to the destination in accordance with the selected shipment route.

A second aspect of the invention provides a method for transporting cargo from an origin to a destination, and a third aspect of the invention provides a data carrier bearing machine-readable data which, when executed by a computing device operable to control transportation means causes the computing device to perform the cargo transportation method.

In one embodiment, an apparatus and method of transporting packages is disclosed, including providing options for a shipment route, including at least one portion of the shipment route being air cargo, receiving, via a communications network, from a package shipping customer via a consignee data input device such as a computer terminal or a portable communication device, a shipping request including at least an origin, a destination and a latest time for delivery for a package; determining, via a computing device, a first optimized list of alternative shipment routes, optimized in relation to a default shipping criterion; and providing, via the computing device, the customer with an option to further optimize according to a first additional criterion selected by the customer from a list of optimization criteria. The customer may select a route from the first optimized list, or may elect to further customize the route by selecting a first additional optimization criterion. The default shipping criterion is based on transportation efficiency, and may relate to delivery time or ecological considerations in relation to the shipment route. The list of optimization criteria from which the customer may select may include at least price, time of delivery and greenness. The default shipping criterion based on transportation efficiency may relate to speed of delivery of the package, or may relate to "greenness". The "greenness" criterion may be related to ecological factors such as carbon emissions, damage to ozone layer, use of renewable energy, wear and tear to transport infrastructure or vehicles such as road vehicles or aircraft, or any other factor relating to the environment, either negatively or positively.

Embodiments of the apparatus and method may further comprise determining, by the computing device, a second optimized list including a route optimized for the first additional optimization criterion selected by the customer, and at least one alternative route that is less optimized for the first optimization criterion selected by the customer and having a significant marginal value in at least one other of the plurality of optimization criteria. The customer may then be presented with the second optimized list, and may elect to choose a shipment route from that list.

Also the apparatus and method may further comprise providing the second optimized list to the customer, via the communications network; providing, via the computing device, the customer with an option to further optimize based upon a second additional optimization criterion selected by the customer from the plurality of optimization criteria, and determining, by the computing device, a third optimized list including a route optimized for the second additional optimization criterion selected by the customer, and at least one alternative route that is less optimized for the second optimization criterion selected by the customer and having a significant marginal value in the first optimization criterion. The customer may then be presented with the third optimized list, and may elect to choose a shipment route from that list.

The apparatus and method may comprise providing, via the communications network, the third optimized list to the customer; providing, via the computing device, the customer with an option to further optimize based upon a third additional optimization criterion selected by the customer from the plurality of optimization criteria and determining, by the computing device, a fourth optimized list including a route optimized for the third optimization criterion selected by the customer, and at least one alternative route that is less optimized for the third optimization criterion selected by the customer and having a significant marginal value in at least one other of the plurality of optimization criteria. The customer may then be presented with the fourth optimized list, and may elect to choose a shipment route from that list.

The cargo or package may then be transported from the origin to the destination, along a route selected from one of the lists of alternative routes prepared on the basis of the customer's selection of optimization criteria. Typically, a vehicle will be dispatched to collect the package from the point of origin and transport it to a departure airport, where the package will be transferred to an aircraft to complete the airborne leg of the journey to an arrival airport. At the arrival airport, the package will again typically be transferred to a vehicle to complete the journey to the destination. Alternatively, the package may be delivered to the departure airport by the consignee, and/or collected from the arrival airport by the addressee. It is further foreseen that the package may travel from the arrival airport to the destination airport by means of more than one flight, and may be transferred from one aircraft to another at one or more intermediate airports.

### Brief Description of the Drawings

For a more complete understanding of the present invention, reference is made to the following detailed description of an exemplary embodiment considered in conjunction with the accompanying drawings, in which:

FIG. 1 is a schematic overview of the apparatus for transporting cargo, according to one embodiment of the present invention;

FIG. 1A is a schematic and block diagram representation of a portion of a system and method according to aspects of an embodiment of the disclosed subject matter;

FIG. 1B is a schematic and block diagram representation of a portion of a system and method according to aspects of an embodiment of the disclosed subject matter;

FIG. 2 is a schematic and block diagram representation of an initial pricing system and method module according to aspects of an embodiment of the disclosed subject matter;

FIG. 2A is a representation in table form of aspects of the module of FIG. 2;

FIG. 3 is a schematic and block diagram representation of a reverse auction module according to aspects of an embodiment of the disclosed subject matter;

FIG. 4 is a schematic and block diagram representation of an intelligence center module according to aspects of an embodiment of the disclosed subject matter;

FIG. 4B is a representation in table form of aspects of the module of FIG. 4;

FIG. 4C is a representation of a distribution curve useful in aspects of the module of FIG. 4;

FIG. 4D is a representation in table form of aspects of the module of FIG. 4;

FIG. 4E is a representation in table form of aspects of the module of FIG. 4;

FIG. 5 is a schematic and block diagram representation of a variables processing module system and method according to aspects of an embodiment of the disclosed subject matter;

FIG. 6 is a schematic and block diagram representation of a route optimization module system and method according to aspects of an embodiment of the disclosed subject matter; and;

FIGS. 6A-6E are representations in table form of aspects of the module of FIG. 6.

### Detailed Description of Exemplary Embodiments

In general, an apparatus and method according to aspects of embodiments of the disclosed subject matter enables environmentally friendly resource allocation and sharing for direct-shipping of couriered packages on commercial flights of commercial aircraft. It will be understood that the term commercial flights of commercial aircraft refers to scheduled passenger flights or other flights that are occurring in any event and have available cargo space, i.e., "air cargo" space in addition to the passengers and baggage normally being carried. The system gathers, interprets, and utilizes real-time information or intelligence on environmentally-indicative variables, for the pick-up and deployment of couriered packages on commercial airline flights in order to reduce their carbon footprint.

The system uses a mathematically modeled approach, with associated algorithms, as explained in the present application, including preselected parameters, whose outcome is adapted to optimize the reduction of the carbon footprint of the aircraft portion and, if and where applicable, the ground vehicle portions of the end-to-end transportation of the couriered packages, herein a "route." The system and method, for instance, in considering two flights where both aircraft are identical except for the weight of cargo (i.e., all variables affecting aircraft, such as type, flight history and weather conditions remain relatively constant, including the number of passengers), optimizes shipment allocation by placing the packages in the remaining cargo space of the lighter aircraft, thus making the shipment more ecologically efficient.

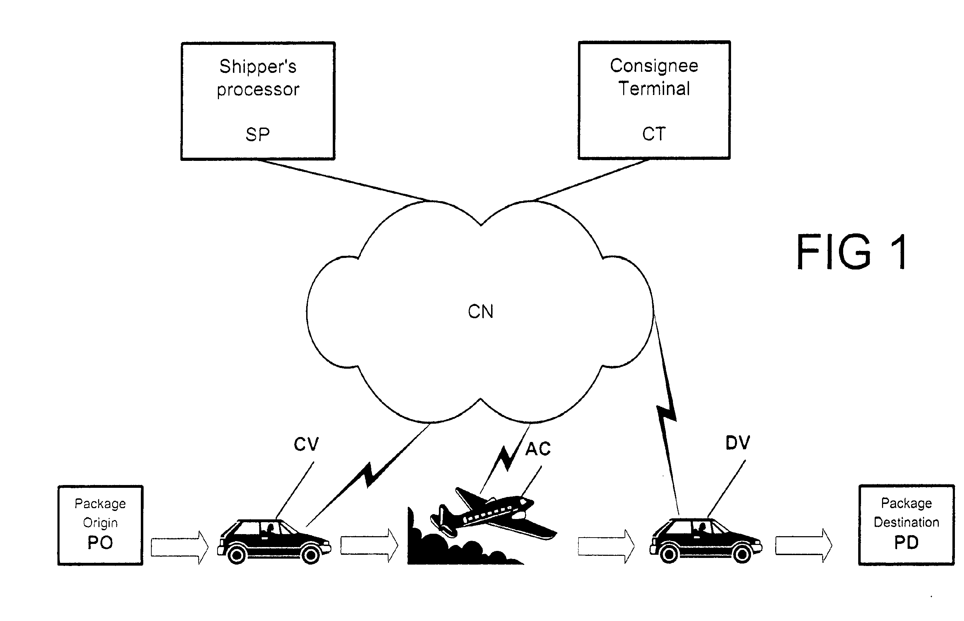

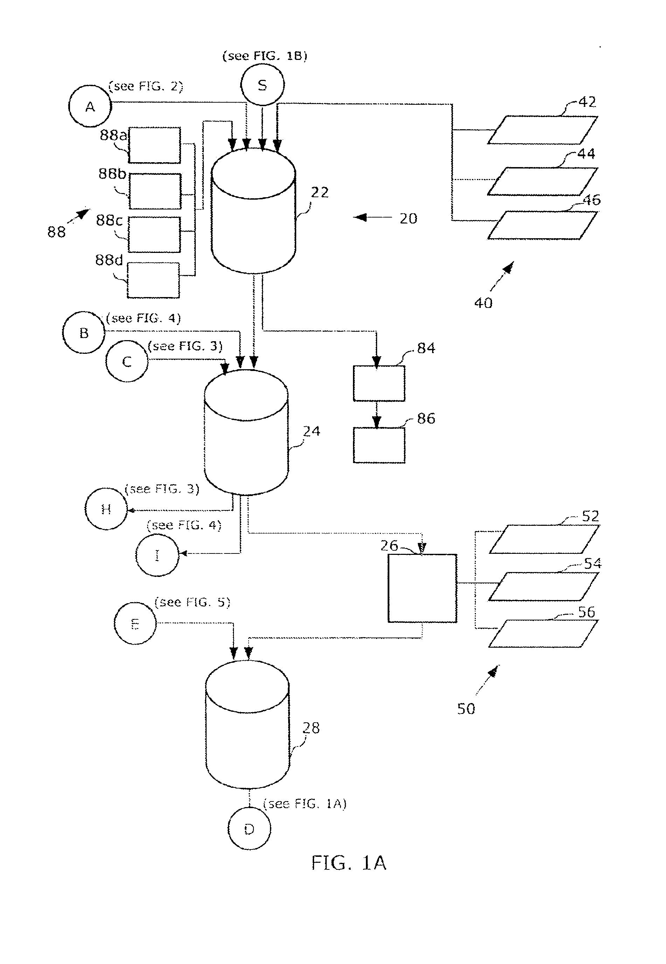

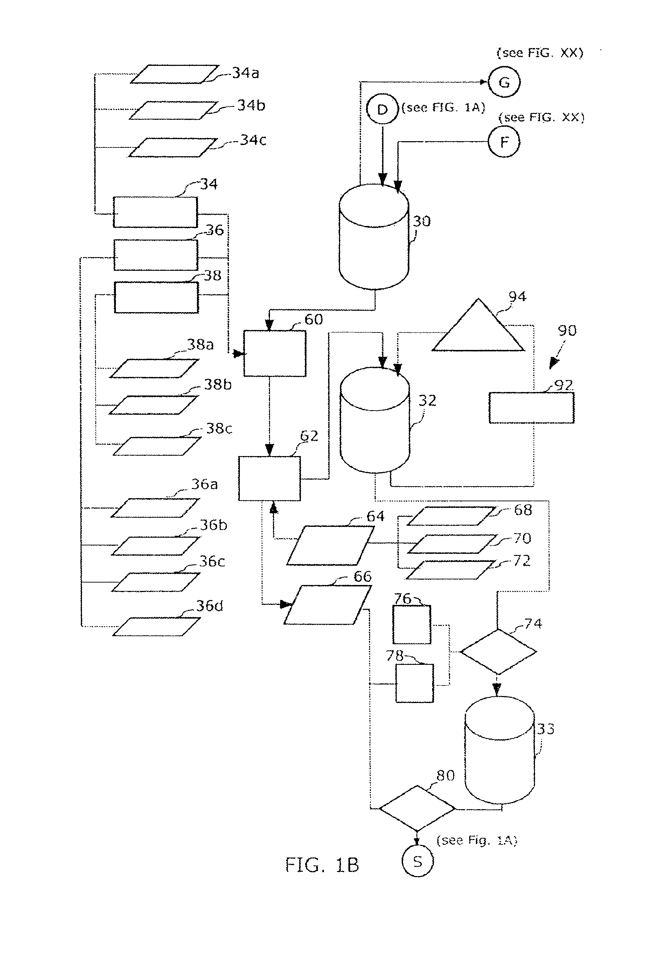

The system, illustrated schematically in **FIG. 1****,** comprises a communications network **CN** to which are connected a customer (consignee) data input device such as computer terminal **CT** which a customer who wishes to ship a package uses to provide details of the origin **PO**, the destination **PD** and shipping requirements for the package to the shipper. The data may be provided directly to the shipper's data-processing equipment, or may be communicated to a human operator who effects the data input to the shippers data-processing system. The shipper operates a processor or server **SP** connected to the communications network **CN**, the shipper's processor **SP** being capable of generating alternative routes for the customer's package on the basis of the customer's requirements and preferences, and providing lists of alternative routes to the consignee terminal **CT**. The customer can then select a shipping route from the list of alternatives presented, and communicate that selection to the shippers processor **SP**. The shipper's processor **SP** will then issue the required instructions to collection vehicle operators **CV**, aircraft operators **AC** and delivery vehicle operators **DV** so that the package is collected from the origin **PO** and delivered to the destination **PD**.

The processing equipment **SP** operated by the shipper includes major components such as a virtual hub, and an intelligence center, and a reversed auction module. The processing equipment **SP** is adapted to gather and utilize information that enables it to coordinate the processes involved with picking up packages and shipping them on a commercial airline flight in a manner that optimizes transportation efficiency, for example by minimizing the overall carbon footprint utilization associated with such shipping or by delivering the package in the shortest possible time. The components of the system and associated processes are described in detail below.

Referring to **FIGS. 1** **A to 6**, the present invention relates to a resource allocation and sharing system ("the system **20"**) constructed in accordance with one embodiment of the disclosed subject matter for shipping couriered packages from one geographical location to another. Referring specifically to **FIG. 1A**, the system **20** may include a virtual hub **22**, including a virtual hub computing device (not shown in FIG. 1A), which virtual hub can serve to consolidate agents, clients, and flights available and determine available combinations of routes, including routes that have been or can be optimized for a certain criterion, e.g., from among certain selectable optimization criteria, including cheapest, fastest and greenest, as an example. In this sense, "optimized" is intended to mean that, where a number of alternative possibilities are available with different values of a particular selection criterion, these possibilities will be ranked in order of the value of that selection criterion. The nature of the selection criterion will determine whether descending order or ascending order of the value of the selection criterion would result in the most preferable alternative being presented as the first of the ranked alternatives. For example, a number of alternatives ranked in accordance with cost might be ranked in ascending order so as to present the cheapest alternative first, while a number of alternatives ranked in accordance with speed of delivery might be ranked in descending order so as to present the fastest alternative first.

An intelligence center **24**, which can include an intelligence center computing device (not shown), can serve to optimize a list of routes presented to the user as part of an initial list of route options. The customer can then be given the opportunity in block **26** to view the list of alternative routes offered for available flights and be given the option to further optimize based on, e.g., one of the three criteria, e.g., price, speed and greenness. A variables processing unit **28**, which can include a computing device (not shown), can serve to process a number of external variables from a selected list of external variables, and another list of a number of selected internal variables, using system-provided information for the generation of an evaluation of the available routes.

The virtual hub **22** may receive customer input **40**, including customer input information is entered into the system **20** through the virtual hub **22** using one of several possible methods of user interface, e.g., three exemplary illustrated methods. One such method may be a system provided client applet **42**, which may be downloaded by the customer to run on any customer interface device (the consignee terminal), e.g., connected to the system **20** through an Internet connection (not shown), such as run on the customer's computer terminal (not shown), e.g., a personal computer ("PC"), a personal digital assistant ("PDA") or a portable device, such as a cell phone or other portable communication device, such as a Blackberry, Droid, etc.

A second example could include through a web-page **44**, e.g., one hosted by the system **20** provider, with which the customer communicates via the Internet from his computer terminal (the consignee terminal). A third could be through a customer service connection **46**, e.g., through a telephone call, including over the public switched telephone network ("PSTN") or through any of a number of wireless telephonic connections, which could be to a live customer server agent of the system **20** operator or an automated interface device (not shown). The virtual hub **22** may also receive input **S** (as indicated by the circle in **FIG. 1A****)**, from a route selection list providing module **80**, shown in **FIG. 1B**.

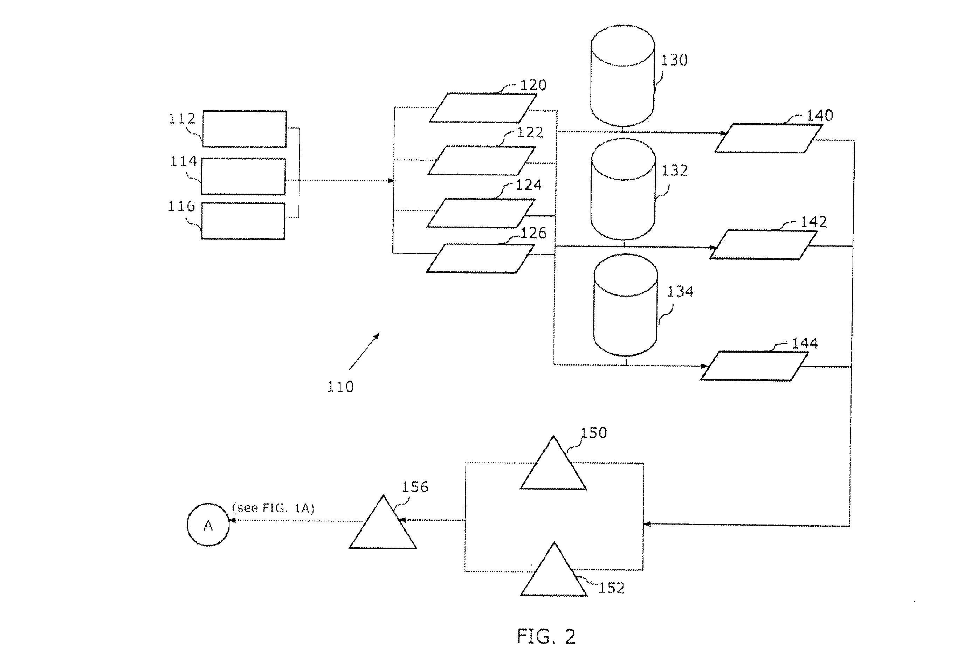

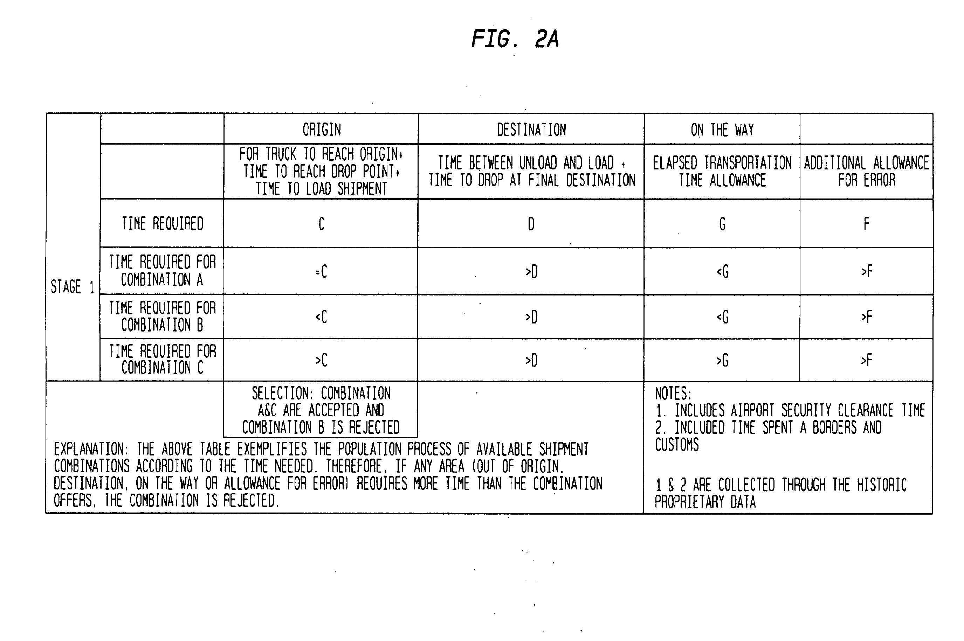

Referring to **FIG. 2** there is illustrated an initial listing process **110** which may be performed in connection with the virtual hub **22**, e.g., to provide input **A** to the virtual hub **22**. The process **110** prepares an initial listing of routes. A route is a trajectory that is made up of any one trip that a respective couriered package shipment can take from origin to destination, and includes ground vehicle and aircraft components. In this process **110**, initially in block **112** a live or automated dispatcher may access a map that shows the current location of all drivers and their respective collection/delivery vehicles. In block **114** a map may be accessed to show traffic conditions and road barriers that delay/expedite arrival, and in block **116** the fastest vehicle dispatch location is calculated.

Data on historical proprietary information may be accessed at block **120**, ground traffic conditions may be accessed at block **122**, the current location of vehicles may be accessed at block **124**, and estimates of time for delivering shipment to appointed destinations such as the airport, etc., may be accessed at block **126.** All data regarding flight specifications, which may be provided by airline carriers through an applet or other mutually agreeable data sharing mechanism, may be accessed at block **130.** In addition, all data which specifies current system **20** requirements for fulfilling the shipment may be accessed at block **132**, and all data specifying customer requirements for the date of delivery, including time of delivery, the origin and the destination, may be accessed at block **134**.

In blocks **140**, **142**, and **144**, the process **110** derives routes 1 through 3. The system **110** arranges the routes into combinations, which are consolidated set of routes that a package follows to reach its final destination. Each combination has a corresponding set of selectable optimization criteria, such as date of arrival, price, and carbon footprint. A first combination is provided in block **150**, and all other combinations are provided in block **152**. The list of all possible combinations are provided at block **156**, which serves to provide input **A** to the virtual hub **22**. **FIG. 2A** exemplifies the population process, for a stage 1 evaluation, for available shipment combinations according to, e.g., one criterion, such as the time needed.

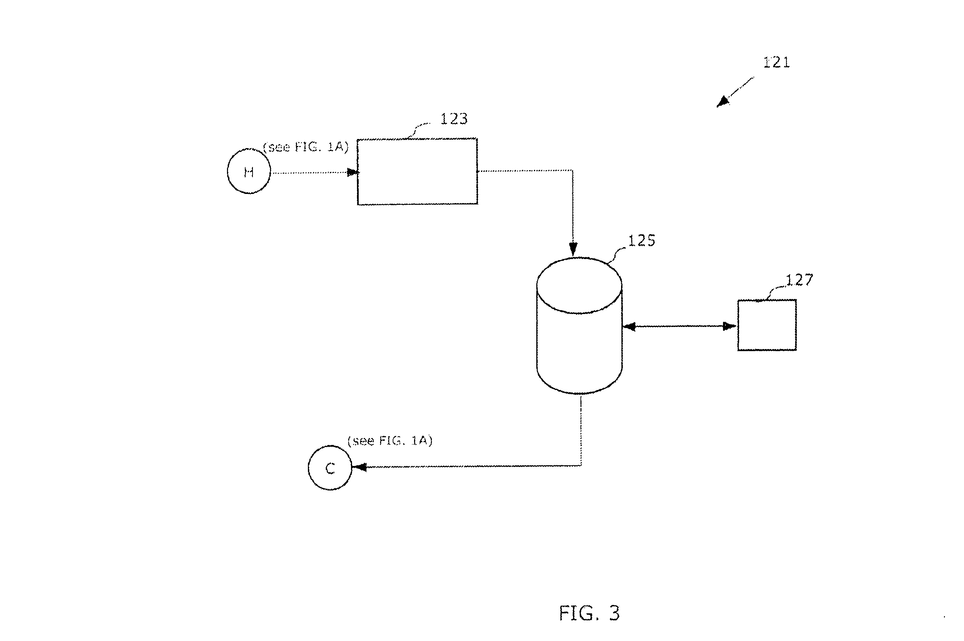

Referring to **FIG. 3**, the intelligence center **24** may both provide an output **H** and receive a feedback input **C** from a reverse auction module **121.** The reverse auction module **121** allows carriers to place a bid for the price of their available cargo space. The system **20** then chooses the most cost-effective option, based on the bid prices. By allowing carriers to assign a bid for their available cargo space, pricing is streamlined and keeps the interaction competitive. The carriers are then unable to "see" what their competitors are bidding. The reverse auction module **121** may alternatively also function on an open basis in which the carriers are able to see what their competitors are bidding. It will be understood that the "bidding" need not be done in real time. In other words, the air cargo space provider(s) may from time to time submit price lists, which may vary with aircraft type, flight route, size of package, etc., rather than bidding in real time on each possible shipment.

At block **123**, an application continuously accumulates the best prices offered by those competing for a shipment(s), from the output **H** of the intelligence center **24**. A reverse auction mechanism **125** receives the accumulated best prices information, and also receives bidding prices for available cargo space from airline carriers (e.g., on-line) through the use of an airline carrier applet at block **127**. The reverse auction mechanism **125** provides all of this information to the intelligence center **24** as input **C**.

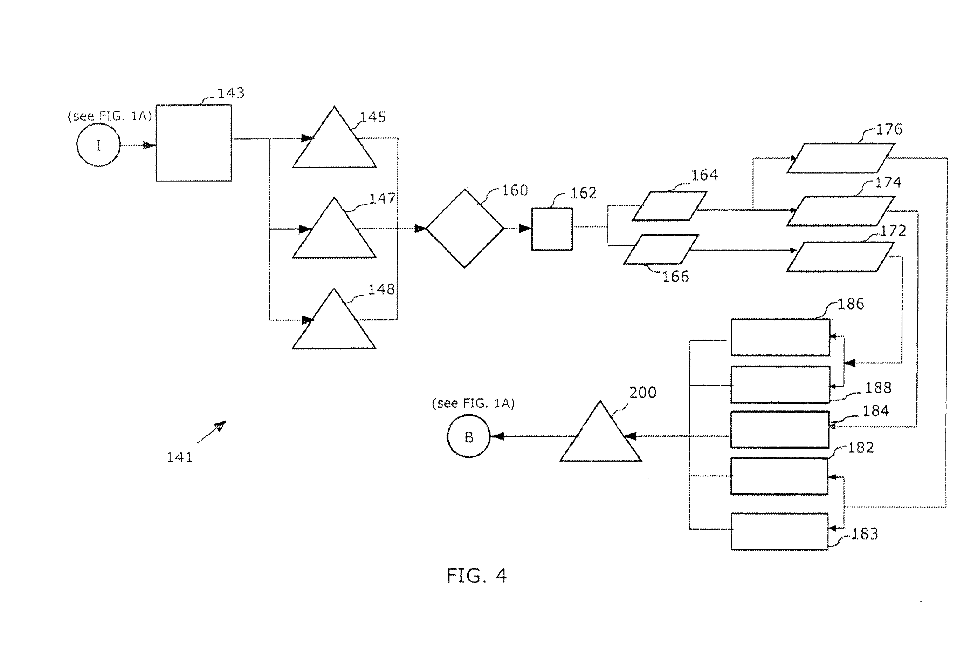

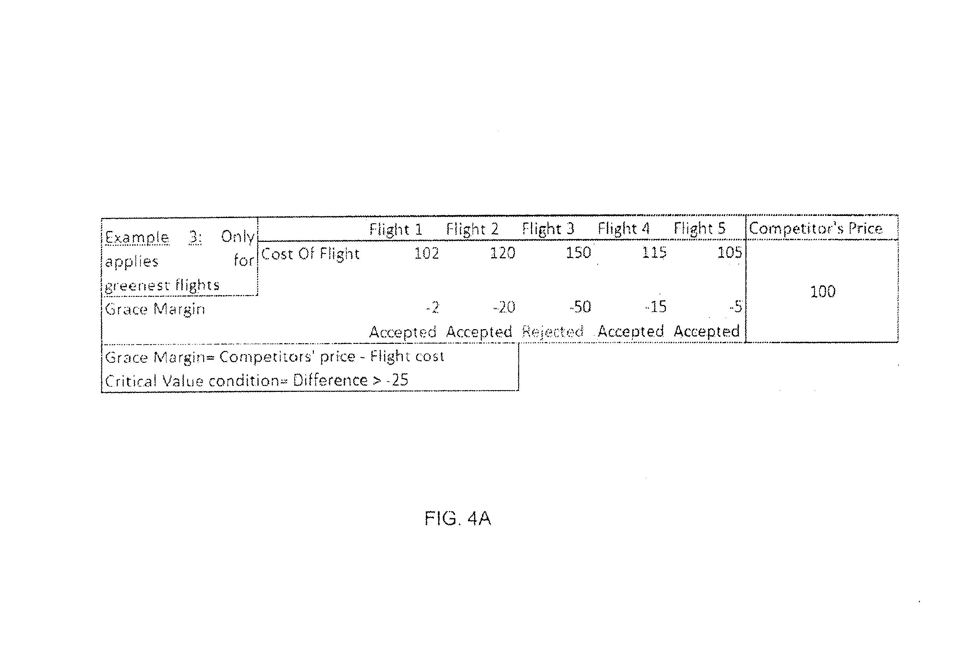

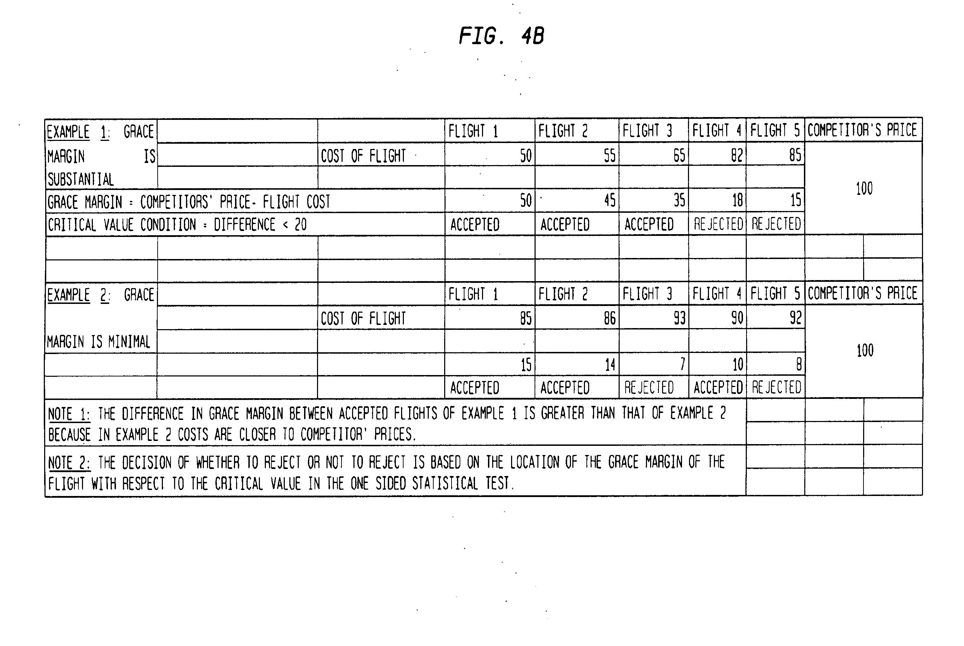

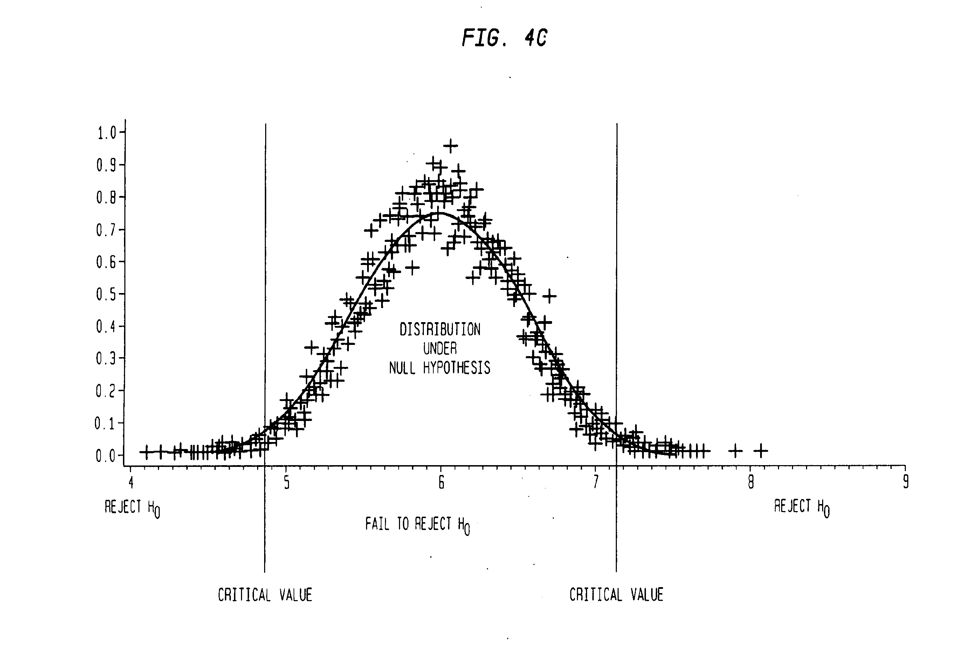

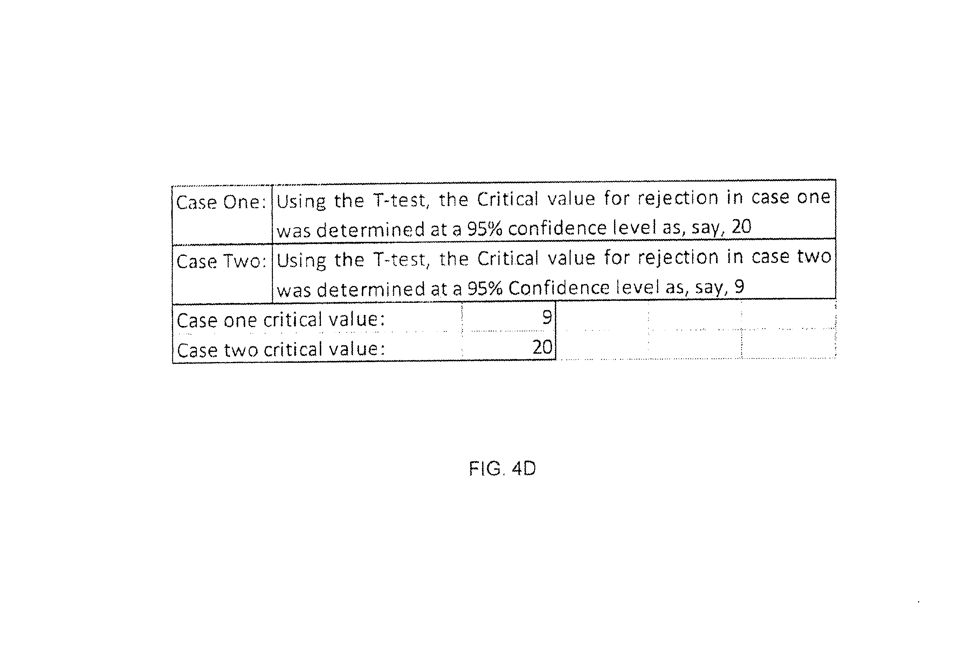

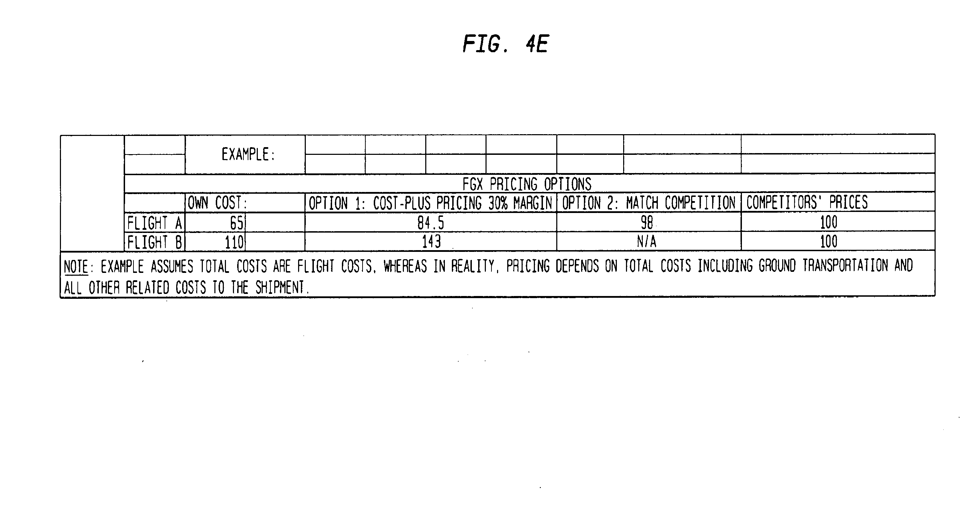

Referring now to **FIG. 4**, in addition to the input from the virtual hub **22**, the intelligence center **24** may receive an input **B** from a route pricing module **141**. More particularly, at block **143** the intelligence center evaluates green factors of flights, and populates available flights with various costs and generates a list composed of various factors. For instance, at block **145**, flights with least costs are listed. Flights are listed at block **147** only if they were evaluated as greenest. **FIG. 4A** illustrates an example of such a listing of greenest flights. In the case of a green flight where a competitor's price is below the system **20** cost, the price may be set at a premium above the green flight cost as illustrated later in the route pricing module **141** process.

Flights within a deviance from least cost can be included, where the size of the deviance depends on such things as, e.g., the differences between each shipment's cost and the current price of the competitor. Such flights are listed at block **148**. **FIG. 4B** illustrates examples of listed flights for various operator margins. The size of the margin may be determined using a statistical hypothesis testing mechanism such as the distribution under null hypothesis curve shown in **FIG. 4C**. Examples for determining critical values for rejections, in the distribution under the null hypothesis curve, using, e.g., a T-test, are shown in **FIG. 4D****.** The list of flights developed at blocks **145**, **147**, and **148**, are now subjected to two possible price setting solutions, via block **160**, based on the price setting policies or strategies provided at block **162**.

The first set of price setting solutions is determined when competitors' prices are available at block **164**. Pricing Outcomes 1A, 1B, and 1 C, described below, are possible pricing solutions:

Outcome 1A: If a flight has not been evaluated as one of the greenest, at block **174**, then the competitors' price is matched at block **184**. The costs for these choices are necessarily below competitors' prices. The price is then appended to the list of prices (i.e., which have been set according to pricing policy) at block **200** The list of prices at block **200** is provided as an input **B** to the intelligence center **24**.

Outcome 1B: If a flight has been evaluated as one of the greenest, at block **176**, and if the competitors' price minus the cost of the flight is greater than the preset minimum required by the system **20** operator, then the price is established by applying a slight markdown to the competitors' price, at block **182.** The price is then appended to the list of prices at block **200**, which in turn is provided as an input **B** to the intelligence center **24**.

Outcome 1 C: If a flight has been evaluated as one of the greenest, at block **176**, and if the competitors' price minus the cost of the flight is less than the preset minimum required, then the price is established by cost-plus pricing, at block **183**. In this case only, the system **20** allows for exceeding the competitors' price since the customer would be paying a premium for the greenest option. The price is then appended to the list of prices at block **200**, which in turn is provided as an input **B** to the intelligence center **24**.

The second set of price setting solutions is determined when competitors' prices are not available at block **166** and a set of historical prices for shipments with similar characteristics is available at block **172**. Pricing Outcomes 2A and 2B, described below, are possible pricing solutions:

Outcome 2A: If the historical price ensures the minimum margin required over the current cost, then the historical price is matched at block **186**. The price is then appended to the list of prices at block **200**, which in turn is provided as an input **B** to the intelligence center **24**.

Outcome 2B: If the historical price minus the current cost is less than the minimum margin required, then at block **188** the price is set using cost-plus pricing. The price is then appended to the list of prices at block **200**, which in turn is provided as an input **B** to the intelligence center **24**.

Referring again to **FIG. 1A**, the variables processing unit **28** may receive further user input after the user is provided with information in block **26** concerning, as an example, a list of prices offered for available routes including the available flights and is given the option to optimize based on one of several selectable criteria, such as the three criteria mentioned above, price, speed and greenness. The user input **50** to the variables processing unit **28** may be in the form of selecting one of three options: option #1, **52**, i.e., greenest shipping based on shipping variables relevant to "greenness"; option #2, **54**, i.e., cheapest green shipping based on variables defining price; and option #3, **56**, i.e., green shipping based on variables defining speed, i.e., time of delivery.

Optimizing green shipping based on variables relating to another of a selected set of criteria, such as on price, can be very useful, even after the full list of prices is provided to the customer by the intelligence center **24** in the earlier stage of the system **20** processes, i.e., including a reverse auction discussed below. Doing so can not only provide an option or set of options with best price(s), it can also provide the list with choices that show small variances from the best price(s), but also perhaps having a substantial marginal benefit(s) in relation to other criteria, e.g., towards greenness and/or speed.

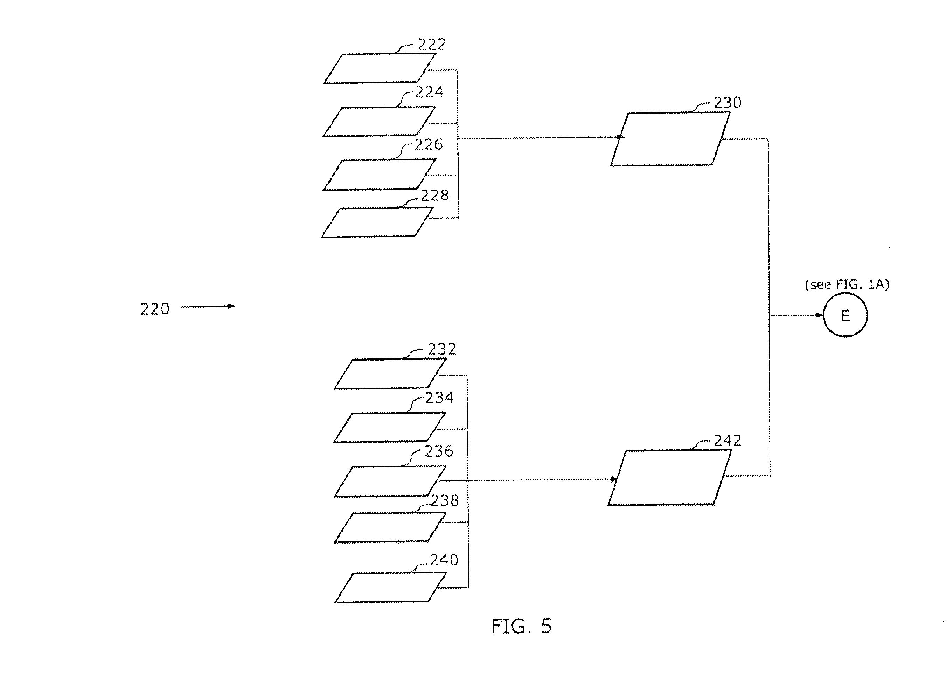

Referring to **FIG. 5**, the variable processing unit **28** may implement a variables processing method **220**, and receive feedback **E** from the variables processing method **220**. A plurality of variables are accumulated for use by the system **20** for optimizing shipments in processes that are described in detail below. More particularly, external variable data such as delays at ports, aircraft carbon footprint, tare of the flight, and other applicable variable data that may yet be identified, are processed at blocks **222, 224, 226, and 228,** respectively. The external variable data is accumulated through the use of an applet in association with external entities, at block **230.** Likewise, internal variable data such as historical port information, aircraft cargo capacity, historical carrier information, weather conditions, and other variable data that may affect cargo transportation, are processed at blocks **232, 234, 236, 238, and 240,** respectively. The independent variable data are accumulated by the system **20** through public sources and/or accessible third-parties, at block **242.** The external and internal variable data is provided as input E to the variable processing unit **28**.

Referring to **FIG. 1B**, the system **20** may also include a level one optimization unit **30** as a further part of the intelligence center **28**, which may serve to weight the external and internal variables according to weighting algorithms The algorithm can be identified in the table presented in the flow chart "external and internal variables" by looking at the table vertically. In essence, each variable is the result of a regression of a cross-sectional or time series. Each variable, then, forms an integral part of the equation upon which the decision is made. Each variable, as the result of regression, maximum difference scaling or the like, is thereby assigned a weight based on the preference of the customer. These can be specific to a customer, e.g., as may be gathered throughout a customer-knowledge gathering process that can occur on line, via phone or via meeting as in the normal course of business. The external and internal variable data may be modified depending on the sought-after optimization.

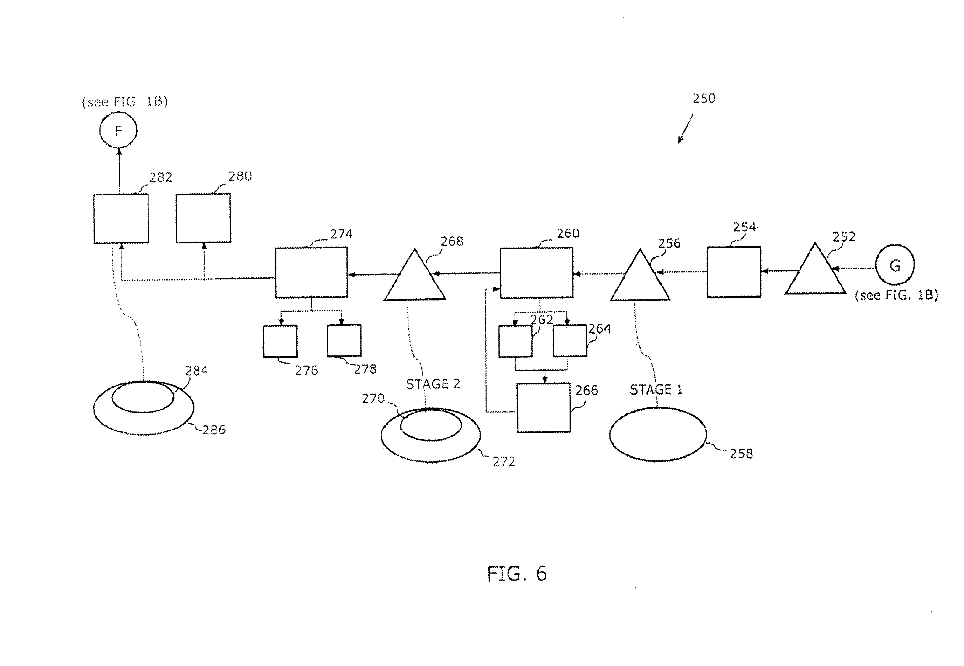

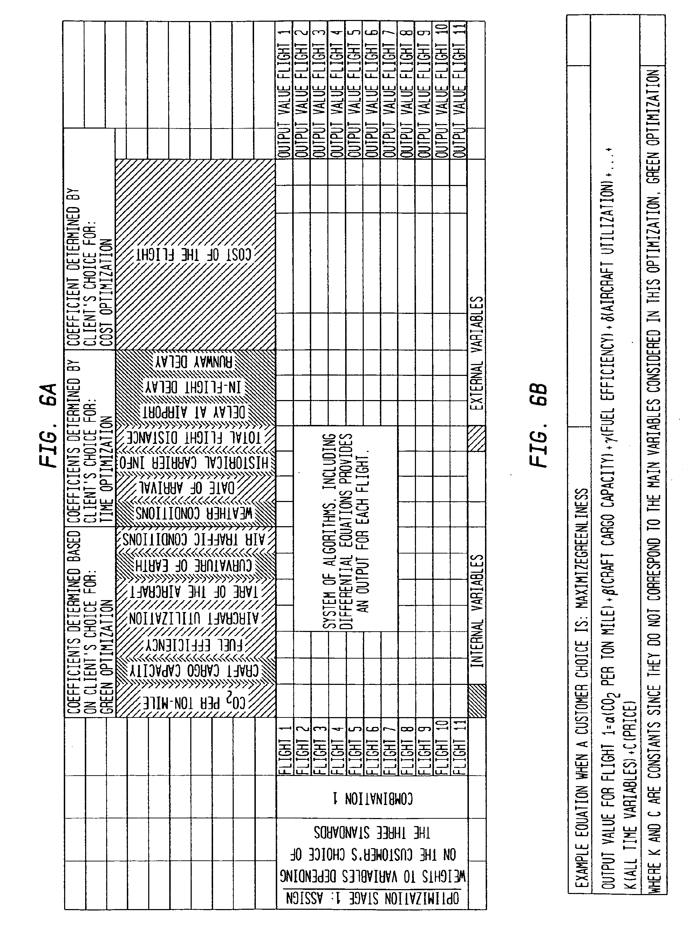

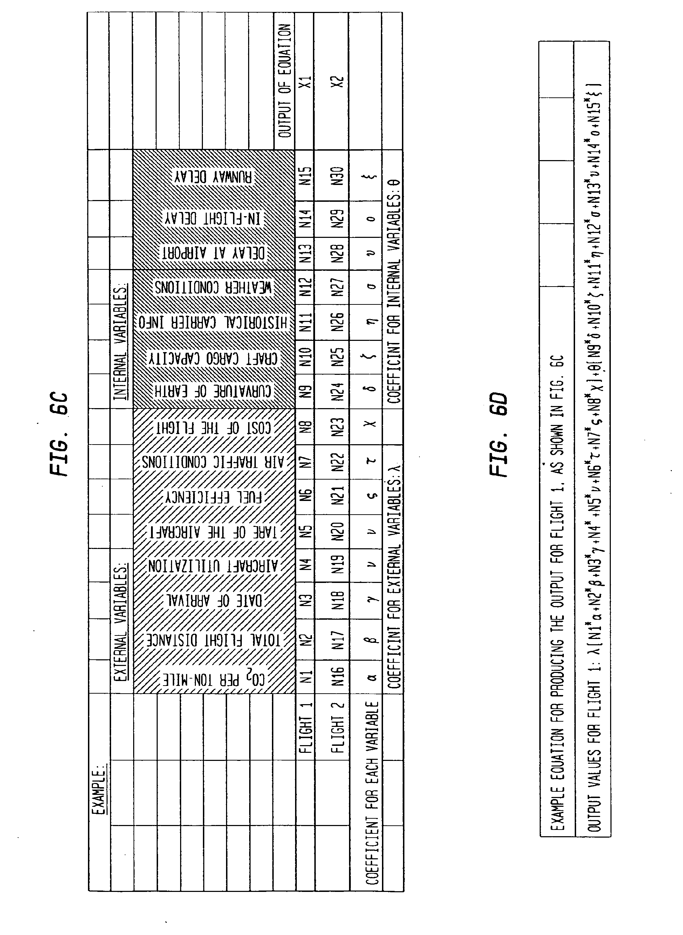

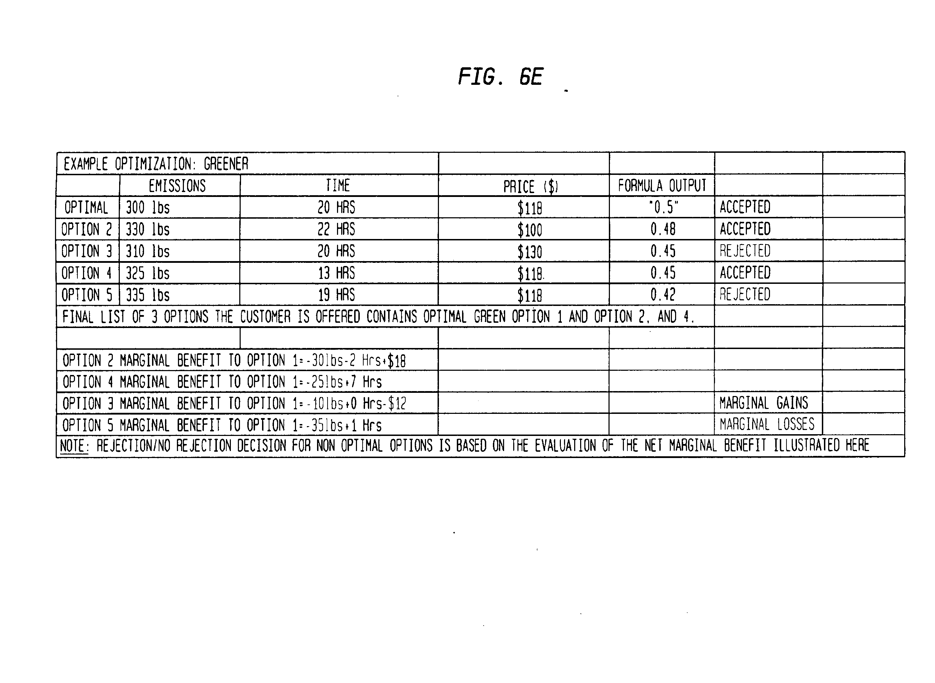

Referring to **FIG. 6**, the level one optimization unit **30** may implement a variables weighting method **250** and receive feedback **F** from the variables weighing method **250**. The level one optimization unit **30** may also provide output **G**, to the variables weighing method **250**. More particularly, a consolidated and optimized list of flights with available cargo space is provided at block **252**. At block **254**, appropriate weights are assigned to each of the variables of green, time, or cost depending on customers' choice, such as a predominant weight for the chosen variable, so as to eliminate flights that are not within some range of the best for the variable. A system of comparison equations also favours the flights that result in the best flight for the chosen variable, based on parameters of the variables from the flight(s) (internal and external), which then provides an output for each flight, at block **256**. The alternates can be then chosen based on the variables associated with each alternative flight which is within some range for the chosen variable, as to effects on the other variables, e.g., for greeness, the type of aeroplane, its age, the airport from which it leaves, its maintenance history, if available, the current weather, its current cargo load, etc. As an example at this stage, the flights are scanned and the weights remain constant at this point, e.g., if the customer chooses cheapest, the flights will be rated by cost only, for choosing the cheapest and others that have tolerable variance in cost, but other advantages in greenness and time for the customer to consider. Which can be a ratio of the difference from the first listed flight as to the other condition(s) and then the savings in the other flights that result in a negatively related option criterion having this percentage difference or less then it can be proposed to the customer. At "stage 1" a classified initial list of flights, with optimized prices, is provided at block **258**. The initial list of flights may be optimized on the basis of price as the shipping criterion, as in the above-described embodiment. Alternatively, the initial list provided to the customer may be optimized on the basis of "greenness" as the shipping criterion, and may comprise a series of alternative routes of diminishing "greenness" at different price levels.

An example of such a list is illustrated in **FIG. 6A**, and an example of an equation for producing such an output is shown in **FIG. 6B**. At block **260**, a model-based-diagnosis, for fault management, operates by adjusting variables' weights and evaluating flights within a close range of an optimal output, e.g., which can depend, e.g., on a tolerance level pre-assigned universally or assigned by the system to a given client based on the client's information gathering survey discussed above. An example of a standard tolerance evaluated to date is 10%. The diagnosis reviews the weight of the external and internal variables, in processes at blocks **262** and **264**, respectively. An example of outputs of such processes is illustrated in **FIG. 6C**, and an example of an equation for producing such outputs is shown in **FIG. 6D****.**

The amount of error derived from inter-related variables and from the source of the information diminishes after a series of coefficient operations are applied at block **266** including, e.g., data cleansing, e.g., by using a "V" system. The error derived at block **266** is fed back (i.e., as a feed-back loop) to the model-based-diagnosis, at block **260**. Following the model-based-diagnosis, a set of outputs, for an adjusted list of flights, is provided at block **268**, and a "stage 2" optimal flight is populated at block **270**, while all remaining flights with outputs close to the optimal flight are populated at block **272**. The adjusted list of flights provided at block **268** is further evaluated assuming the benefits of the non-selected variables, similarly to the evaluation discussed above as to the level one optimization, which may add flights to the listing from the level one optimization or provide an entirely separate list considering each of three dimensions of cost, time and carbon footprint, at block **274**. The first listed flight will be the optimum for the particularly selected criterion (greenness, cost or speed), but other entries on the alternatives list may vary. The evaluation at block **274** further considers i) all non-optimal flights with significant marginal benefit pertaining to the two other standards or dimension (i.e., cost, time, carbon footprint as determined by an output and a tolerance level, are listed at block **276**, and ii) all non-optimal flights with insignificant marginal benefit pertaining to the two other standards are eliminated at block **278**, and therefore are not further evaluated at block **274**.

An optimized flight is then produced at block **280**, such flight being produced according to the customer's choice of standard and strict input provided by the customer. An additional list of optional flights, that is within a tolerated variance from the customer's initial inputs, determined, e.g., by the customer's output and the tolerance level, but offers increased benefit towards one or more of the standards not chosen, is produced at block **282**. The optimal flight is populated at block **284**, and the optional flights (i.e., having close outputs to the optimal flight and having a significant benefit towards the other standards) are populated at block **286**.

**FIG. 6E** illustrates an example listing comprising such populations, specifically for an optimal flight and optional flights that are optimized for "greener". It is understood that all of the negative numbers in the marginal benefits section of the **FIG. 6E** represent marginal losses, and all of the positive numbers in marginal benefits section of the **FIG. 6E** represent marginal gains. The optimal flight and the optional flights produced at blocks **280** and **282**, respectively, are provided as input **F** to the level one optimization unit **30**. It will be understood that the values for the greenness (e.g., "emissions," "carbon footprint" or the like), delivery time ("Time") and cost ("Price") can be compared to the flight judged as "optimal," and weighted analysis, as discussed above, and the weighted values summed to select the final list. As an example, as compared to the optimal flight, a flight may be 5% slower or 5% more costly, but ≥5% greener, and thus be presented to the customer as one of the alternatively listed flights.

As an output of the level one optimization unit **30**, the customer is provided, in block **60**, with two lists of combinations of shipping options, each forming a route, and with one option route being evaluated as the best from the standpoint of the first criterion selected by the customer, i.e., speed, price or greenness. The second list can be of optional less optimized routes with benefits in the other two criteria. Thus the customer is provided a listing of a shipping combination (i.e. a "route") that is determined to be the optimum based on the preferred selected optimization criterion previously chosen. The optimum route can include a plurality of shipping legs forming a route that is the best for the chosen optimization criterion and has other related criteria characteristics, such as ℓ₁, speed, λ₁, greenness, α₁, cost, and β₁, tax implications/savings, with possible other criteria, such as "future tax value," perhaps being also considered. "Future tax value" could be considered where the carbon footprint allowance for any given company is something that can be traded and the measure of carbon footprint used by a company over its allotted limit can be related to future tax implications. It will be understood that other ways in which carbon usage can affect a company's bottom line are also possible and that concept is intended to be inclusive of the concept of "tax implications."

As noted above, the customer is also presented in block 60 with a list of one or more less-optimal choices, for the criterion selected for optimization, but with other possible benefits attainable by the customer for other selectable optimization criteria. An example of the format of such a listing of combinations slightly outside of customers' optimization for the first selected criterion, i.e., speed, price and greenness but with significant marginal benefits is shown in **Table 1**. The classification is based on an algorithm such as that discussed above, which determines output values for the variables, e.g., cost, speed, greenness as they relate to the variable in the optimal flight and the degree of improvement for at least one of the other non-selected variables.

**Table 1**

| Delivery Date/Time | Greenness Carbon Savings | Cost | Tax Implications/Savings |
|---|---|---|---|
| ℓ₂ | λ₂ | α₂ | β₂ |
| ℓ₃ | λ₃ | α₃ | β₃ |
| ℓ₄ | λ₄ | α₄ | β₄ |
| ℓ₅ | λ₅ | α₅ | β₅ |
| ℓ₆ | λ₆ | α₆ | β₆ |

It will also be understood that **Table 1** is illustrative only and the subscripts given to the variables do not necessarily mean that the second listed combination has the second best value in each criterion category. It is also not necessarily so that the listed delivery time variables, assuming that is the first optimization criterion category chosen by the customer for optimization, are listed in order of increasing cost. Rather, the system can produce the listings. e.g., with some weighting score for the entire set of criteria values and rank each combination (route) accordingly.

Continuing to refer to **FIG. 1B**, in block **34**, if the optimization is for fastest, the customer may also be offered three types of scenarios, in blocks **34a-c**, to pick from in the list of "tolerated," but less optimal combinations. That is the occurrence of the different scenarios (alternatives) depending on whether or not they are available options. These can include block **34a**, lower price but with a later delivery, block **34b**, same arrival time as optimal option but with a lower carbon footprint, and higher price, and block **34c**, later arrival time than optimal, but with a lower carbon footprint, and with a higher or lower price (depending, e.g., on cost and competitors' pricing).

In block **36**, if optimization is selected for "greenest," the customer may be offered four types of alternatives to pick from in the list of "tolerated" but less optimal combinations, which again amounts to the occurrence of the different scenarios (alternatives) depending on whether or not they are available options. In block **36a**, if the greenest is also the fastest, then the customer is offered the choice of a cheaper price, with later delivery. In block **36b** the customer is offered an option with faster shipment, but with a higher carbon footprint and a higher price. In block **36c**, the customer is offered an option with the same carbon footprint, but with a lower price, and a later shipment. In block **36d**, if, an exception occurs in which the list of tolerated less optimal options offers one or more options that result in higher carbon footprint, however, with a significantly cheaper cost, the system can request a manual override to offer the option with the lower cost at such lower cost.

In block **38**, if optimization is for the cheapest, the customer may be offered three types of scenarios to pick from in the list of "tolerated" though less optimal combinations, again according to the occurrence of the different scenarios (alternatives) depending on whether or not they are available options. In block **38a**, a scenario with a faster shipment, but at a higher price, block **38b**, if greenest is already the cheapest, then the customer would have no other alternative, and in block **38c**, lower carbon footprint, but with a higher price, and better, same or worse shipment time.

In block **64** the customer may be given a further opportunity to select another second optimization criterion for the system to use to optimize even further at a second level of optimization **32**, where, as noted, the customer can choose a second optimization criterion. Thus, the customer can choose in block **64** to optimize one of the remaining two criteria on output combinations of shipping legs, i.e., routes, the a second level optimization module **32**. The choices given in block **64** are block **68**, cheapest, block **70**, fastest, block **72,** greenest. This choice is then fed back through blocks 64 and 62 to the second level optimization unit 32.

In block **66** the customer may, in lieu of the choices offered in block **64**, choose to adopt one of the shipping combinations (routes) presented in blocks **34**, **36** and **38**. In this event, the process moves to block **80**, which returns the selection of the customer through circle **S** to the virtual hub **22** for processing. In block **80**, the customer can choose from the listing of the single optimized route or from the supplemental list of alternative routes which are optimized based on the customer's current choices and alternates that are less optimal but with tolerable differences and other benefits apart from the choice of variables

Once the customer has selected a route from the list of alternatives offered, the virtual hub **22** issues and if instructions to the transport infrastructure so that the package is collected from the origin, transported to a departure airport, flown to an arrival airport, and finally delivered to the destination.

In block **84** (see **FIG. 1A**), the customer can track the delivery and receive shipment notices indicated above as the shipment is completed in block **86**. The system **20** virtual hub **22**, in shipment module **88**, includes block **88a** which can assign a shipment code, dispatch orders for necessary pickups and drops can be done in block **88b**, customer tracking details for the shipment can be provided to the customer in block **88c**, and a certificate showing the amount of carbon footprint saving can be provided in block **88d** for the customer according to the chosen route.

Assuming the customer makes the selection in block **64** discussed above, then block **62** provides this feedback to the system **20** level two optimization unit **32**. The level two optimization module **32** in the intelligence center **24** can then optimize according to the customer's second choice of an optimization criterion from the remaining two, where there are three to start, as in the current example embodiment. The system **20** can thus evaluate benefits from one of the two other criteria selected from those not previously selected by the customer, in order to, e.g., provide to the customer the opportunity of adopting this second level optimization, and thus, expand the customer's choices.

In this level two optimization process **90**, the level two optimization module **32** can implement a process **90**, wherein, e.g., in block **92** a further optimization based on one of the remaining two choices, along with the originally chosen optimization criterion, can occur at block **94**, for the second selected optimization criterion which the customer has decided upon in block **64,** similarly to the level one optimization process occurring with respect to the level one optimization module **30** (i.e., described above in relation to **FIG. 6**), discussed in more detail below. That is the optimization can be as to either the first selected criterion and the second possible criterion or the first selected criterion and the third possible criterion in the example embodiment of three possible criteria to select, according to the second choice of the customer from among the second and third possible criteria choices.

In other words, as an example of a possible embodiment, the output list from block **94**, in the example being described, can be an optimal choice for a route based on the second selected optimization criterion, and the alternates list based on flights that are less than optimal for the second criterion, but within some tolerable variance of the first selected variable. For example, if the first chosen criterion is "greenness" and the second was "cost", then the list will present the most optimal flight from the perspective of greenness, and alternates that are, e.g., within some percentage of "greenness" (103 gallons of fuel as opposed to 100 gallons of fuel - assuming gallons of fuel is the measurement used for "greenness," is a 3% difference). The other flights within at least 3.1 % or as set (always greater than 3%) of the cost, e.g., could be presented to the customer on the alternative list for possible choice by the customer. It will be understood, that the system **20** here might alternatively utilize the same list provided from the first level optimization module **32,** and further optimize for the second selected criterion, or re-optimize all possible routes based on the first and second selected criteria, or otherwise utilize the first and second selected criteria for the second level optimization.

An output of the level two optimization module **32** is again presented to the customer in block **74** and the customer in block **76** can determine that the customer is not satisfied with the current optimization result, e.g., choosing to adjust the variables based on which the optimization is generated, according to the customer's choice in block **64**. Alternatively, the customer in block **78**, if satisfied with the results, can elect to choose the results and the process returns to block **80** to process the shipment logistics as noted above.

If the customer is not satisfied as determined in block 76, the customer can elect for a further optimization in a level three optimization module **33** as part of the intelligence center **28**. The level three optimization can serve to create an optimized classification according to the customer's currently adjusted variables, e.g., using a similar process to the level one optimization and the level two optimization, with an additional optimization for the remaining of the original three criteria, i.e., price, speed and greenness. That is, as noted above, the output of the level three optimization can be a flight optimized for the final optimization criterion, assuming only three are presented, as in the example. The alternatives list can be those flights within some tolerance variance (e.g., a selected marginal value) from the third level optimization criteria based on at least one of the other two optimization criteria.

To summarize, assuming the customer selected as the first optimization criterion speed, the output of the level one optimization process **250** of the level one optimization module **30** would be a flight optimized for speed and perhaps a list of alternates not quite as fast but with other attributes the customer may want, such as a level of greenness or a level of cost. Assuming then that the second optimization criterion selected by the customer was "greenness," the output of the level two optimization process **90** of the level two optimization module **32** would be the flight that is the greenest and with alternates that are, as an example, within some percentage of the greenness measure, and also within such percentage, in an advantageous relationship, to the speed of the optimized flight from the perspective of speed. Finally, the output of the level three optimization process occurring with respect to the level three optimization module **33**, with cost now being the final optimization criterion, will be a flight optimized for cost, and alternatives within some tolerance variance to the values for either greenness or speed (or perhaps also both) as compared to those values for the flight optimized for cost in the level three optimization process.

The following is a disclosure by way of example of a computing device which may be used with the presently disclosed subject matter. The description of the various components of a computing device is not intended to represent any particular architecture or manner of interconnecting the components. Other systems that have fewer or more components may also be used with the disclosed subject matter. A communication device may constitute a form of a computing device and may at least include a computing device. The computing device may include an inter-connect (e.g., bus and system core logic), which can interconnect such components of a computing device to a data processing device, such as a processor(s) or microprocessor(s), or other form of partly or completely programmable or pre-programmed (e.g., hard wired and or application specific customized logic circuitry) device, such as a controller or microcontroller, a digital signal processor, or any other form of device that can fetch instructions, operate on pre-loaded/pre-programmed instructions, and/or follow hard-wired or customized circuitry to carry out logic operations that, together, perform steps of and whole processes and functionalities as described in the present disclosure.

In this description, various functions, functionalities and/or operations may be described as being performed by or caused by software program code to simplify description. However, those skilled in the art will recognize what is meant by such expressions is that the functions result from execution of the program code/instructions by a computing device as described above, e.g., including processor, such as a microprocessor, microcontroller, logic circuit or the like. Alternatively, or in combination, the functions and operations can be implemented using special purpose circuitry, with or without software instructions, such as using Application-Specific Integrated Circuit (ASIC) or Field-Programmable Gate Array (FPGA), which may be programmable, partly programmable or hard wired. The application specific integrated circuit ("ASIC") logic may be such as gate arrays or standard cells or the like implementing customized logic by metalization(s) interconnects of the base gate array ASIC architecture or selecting and providing metalization(s) interconnects between standard cell functional blocks included in a manufacturers library of functional blocks, etc. Embodiments can thus be implemented using hardwired circuitry without program software code/instructions, or in combination with circuitry using program software code/instructions.

Thus, the techniques are limited neither to any specific combination of hardware circuitry and software, nor to any particular source for the instructions executed by the data processor(s) within the computing device. While some embodiments can be implemented in fully functioning computers and computer systems, various embodiments are capable of being distributed as a computing device including, e.g., a variety of forms and capable of being applied regardless of the particular type of machine or tangible computer-readable media used to actually effect the performance of the functions and operations and/or the distribution f the performance of the functions, functionalities and/or operations.

The interconnect may connect the data processing device to define logic circuitry including memory. The interconnect may be internal to the data processing device, such as coupling a microprocessor to on board cache memory or external memory such as main memory, or a disk drive. Commercially available microprocessors, one or more of which could be a computing device or part of a computing device, include a PA-RISC series microprocessor from Hewlett-Packard Company, an 80x86 or Pentium series microprocessor from Intel Corporation, a PowerPC microprocessor from IBM, a Sparc microprocessor from Sun Microsystems, Inc, or a 68xxx series microprocessor from Motorola Corporation as examples.

The inter-connect in addition to interconnecting such as microprocessor(s) and memory may also interconnect such elements to a display controller and display device, and/or to peripheral devices such as input/output (I/O) devices, e.g., through an input/output controller(s). Typical I/O devices can include a mouse, a keyboard(s), a modem(s), network interfaces, printers, scanners, video cameras and other devices which are well known in the art. The inter-connect may include one or more buses connected to one another through various bridges, controllers and/or adapters. In one embodiment the I/O controller includes a USB (Universal Serial Bus) adapter for controlling USB peripherals, and/or an IEEE-1394 bus adapter for controlling IEEE-1394 peripherals.

The memory may include any tangible computer-readable media, which may include but are not limited to recordable and non-recordable type media such as volatile and non-volatile memory devices, such as volatile RAM (Random Access Memory), typically implemented as dynamic RAM (DRAM) which requires power continually in order to refresh or maintain the data in the memory, and non-volatile ROM (Read Only Memory), and other types of non-volatile memory, such as a hard drive, flash memory, etc. Non-volatile memory typically may include a magnetic hard drive, a magnetic optical drive, or an optical drive (e.g., a DVD RAM, a CD ROM, a DVD or a CD), or other type of memory system which maintains data even after power is removed from the system.

A server could be made up of one or more computing devices. Servers can be utilized, e.g., in a network to host a network database, compute necessary variables and information from information in the database(s), store and recover information from the database(s), track information and variables, provide interfaces for uploading and downloading information and variables, and/or sort or otherwise manipulate information and data from the database(s). In one embodiment a server can be used in conjunction with other computing devices positioned locally or remotely to perform certain calculations and functions.

At least some aspects disclosed can be embodied, at least in part, utilizing in program software code/instructions. That is, the functions, functionalities and/or operations techniques may be carried out in a computer system or other data processing system in response to its processor, such as a microprocessor, executing sequences of instructions contained in a memory, such as ROM, volatile RAM, non-volatile memory, cache or a remote storage device. In general, the routines executed to implement the embodiments of the disclosed subject matter may be implemented as part of an operating system or a specific application, component, program, object, module or sequence of instructions usually referred to as "computer programs," or "software." The computer programs typically comprise instructions stored at various times in various tangible memory and storage devices in a computing device, such as in cache memory, main memory, internal or external disk drives, and other remote storage devices, such as a disc farm, and when read and executed by a processor(s) in the computing device, cause the computing device to perform a method(s), e.g., process and operation steps to execute an element(s) as part of some aspect(s) of the disclosed subject matter.

Instructions executed to implement embodiments may be implemented as part of an operating system or a specific application, component, program, object, module, routine or other sequence of instructions or organization of sequences of instructions referred to as "program software". The program software typically includes one or more instructions stored at various times in various tangible memory and storage devices in a computer, and that, when read and executed by a computing device, as defined herein, causes the computing device to perform functions, functionalities and operations necessary to perform a method, so as to execute elements involving various aspects of the function,. functionalities and operations of a method(s) forming an aspect of the disclosed subject matter.

A tangible machine readable medium can be used to store software and data that, when executed by a computing device, causes the computing device to perform a method(s) as may be recited in one or more accompanying claims to the disclosed subject matter. The tangible machine readable medium may include storage of the executable software program code/instructions and data in various tangible locations, including for example ROM, volatile RAM, non-volatile memory and/or cache. Portions of this program software code/instructions and/or data may be stored in any one of these storage devices. Further, the program software code/instructions can be obtained from remote storage, including, e.g., through centralized servers or peer to peer networks and the like. Different portions of the software program code/instructions and data can be obtained at different times and in different communication sessions or in a same communication session.

The software program code/instructions and data can be obtained in their entirety prior to the execution of a respective software application by the computing device. Alternatively, portions of the software program code/instructions and data can be obtained dynamically, just in time, when needed for execution. Alternatively, some combination of these ways of obtaining the software program code/instructions and data may occur, e.g., for different applications, components, programs, objects, modules, routines or other sequences of instructions or organization of sequences of instructions, by way of example. Thus, it is not required that the data and instructions be on a machine readable medium in entirety at a particular instance of time.

Examples of tangible computer-readable media include but are not limited to recordable and non-recordable type media such as volatile and non-volatile memory devices, read only memory (ROM), random access memory (RAM), flash memory devices, floppy and other removable disks, magnetic disk storage media, optical storage media (e.g., Compact Disk Read-Only Memory (CD ROMS), Digital Versatile Disks (DVDs), etc.), among others. The software program code/instructions may be temporarily stored in digital and analog tangible communication links while implementing electrical, optical, acoustical or other forms of propagating signals, such as carrier waves, infrared signals, digital signals, etc. through such tangible communication links.

In general, a tangible machine readable medium includes any tangible mechanism that provides (i.e., stores and/or transmits) information in a form accessible by a machine (i.e., a computing device, which may be included, e.g., in a communication device, a network device, a personal digital assistant, a mobile communication device, whether or not able to download and run applications from the communication network, such as the Internet, e.g., an I-phone, Blackberry Droid or the like, a manufacturing tool, or any other device including a computing device, comprising one or more data processors, etc.

In one embodiment, a user terminal can be a computing device, such as a in the form of or included within a PDA, a cellular phone, a notebook computer, a personal desktop computer, etc. Alternatively, the traditional communication client(s) may be used in some embodiments of the disclosed subject matter.

While some embodiments of the disclosed subject matter have been described in the context of fully functioning computing devices and computing systems, those skilled in the art will appreciate that various embodiments of the disclosed subject matter are capable of being distributed, e.g., as a program product in a variety of forms and are capable of being applied regardless of the particular type of computing device machine or computer-readable media used to actually effect the distribution.

In various embodiments, hardwired circuitry, such as an ASIC(s), may be used in combination with software instructions to implement an aspect(s) of the disclosed subject matter. Thus, the techniques are not limited to any specific combination of hardware circuitry and software nor to any particular source for the instructions executed by any part of the computing device(s). Various functions and operations which have been described as being performed by or caused by software code to simplify description, will be understood by those skilled in the art to mean that the function(s) results from execution of the code by a processor, as a computing device or part of a computing device.

The disclosed subject matter is described with reference to block diagrams and operational illustrations of methods and devices to provide an application activity system. It is understood that each block of a block diagram or other operational illustration ('herein collectively" "block diagram"), and combination of blocks in a block diagram, can be implemented by means of analog or digital hardware and computer program instructions. These computing device software program code/instructions can be provided to the computing device such that the instructions, which execute via the computing device, e.g., on a processor within the computing device or other data processing apparatus, such that, when so executed, the program software code/instructions cause the computing device to perform functions, functionalities and operations of a method(s) according to the disclosed subject matter, as recited in the accompanying claims, with such functions , functionalities and operations specified in the block diagram.

It will be understood that in some possible alternate implementations, the function, functionalities and operations noted in the blocks of a block diagram may occur out of the order noted in the block diagram. For example, the function noted in two blocks shown in succession can in fact be executed substantially concurrently or the functions noted in blocks can sometimes be executed in the reverse order, depending upon the function, functionalities and operations involved. Therefore, the embodiments of methods presented and described as a flowcharts in the form of a block diagram in the present application are provided by way of example in order to provide a more complete understanding of the disclosed subject matter. The disclosed flow and concomitantly the method(s) performed as recited in the accompanying claims are not limited to the functions, functionalities and operations illustrated in the block diagram and/or logical flow presented therein. Alternative embodiments are contemplated in which the order of the various functions, functionalities and operations may be altered and in which sub-operations described as being part of a larger operation may be performed independently or performed differently than illustrated or not performed at all.

Although some of the drawings illustrate a number of operations in a particular order, functions, functionalities and/or operations which are not now known to be order dependent or become understood to not be order dependent may be reordered and other operations may be combined or broken out. While some reordering or other groupings may have been specifically mentioned in the present application, others will be or may become apparent to those of ordinary skill in the art and so the disclosed subject matter does not present an exhaustive list of alternatives. It should also be recognized that the aspects of the disclosed subject matter may be implemented in parallel or in series in hardware, firmware, software or any combination(s) thereof co-located or remotely located, at least in part, from each other, e.g., in arrays or networks of computing devices, over interconnected networks, including the Internet, and the like.

The disclosed subject matter has been described with reference to one or more specific exemplary embodiments thereof. It will be evident that various modifications may be made to the disclosed subject matter without departing from the scope of the disclosed subject matter as set forth in the appended claims. The specification and drawings are, accordingly, to be regarded in an illustrative sense for explanation of aspects of the disclosed subject matter rather than a restrictive or limiting sense.

Those skilled in the art will understand that a system and method of providing package shipment by a package shipper including providing options for a shipment route, including at least one portion of the shipment route being air cargo, i.e., shipment in space available on a commercial airline flight or the like, that is already scheduled to travel on a useable path, i.e., from a desired origin to a desired destination, and is already occupied by passengers and passenger baggage and perhaps other air cargo, is disclosed, which may comprise receiving, via a communications network, from a package shipping customer, input data including at least an origin, a destination and a latest time for delivery for a package; determining, by a computing device, a first optimized list of alternative shipment routes, optimized for a shipping criterion; and providing the customer, via the communications network, with the first optimized list and an option to further optimize according to a first optimization criterion selected by the customer from a list of a plurality of optimization criteria. The list of optimization criteria may include at least price, time of delivery and greenness.

The system and method may further comprise determining, by the computing device in response to the selection by the customer of a first optimization criterion, a second optimized list based on the first optimized list, or determining another completely new optimized list, including a route optimized for the selected first optimization criterion, and at least one alternative route that is less optimized for the first optimization criterion selected by the customer and having a significant marginal value in a second optimization criterion. That is, the second list may include one route optimized for the first selected criterion selected by the customer and another route(s) that might still be selected by the customer.

Also the system and method may further comprise providing, via the computing device, the second optimized list to the customer; providing, via the computing device, the customer with an option to further optimize based upon a second optimization criterion selected by the customer from the plurality of optimization criteria, and determining, via the computing device, a third optimized list including a route optimized for the second optimization criterion selected by the customer, and at least one alternative route that is less optimized for the second optimization criterion selected by the customer and having a significant marginal value in the first optimization criterion. Again, as noted above, the third list may be based on and further refined from the second list, or may be a newly-generated list.

The system and method may comprise providing, via the computing device, the third optimized list to the customer; providing, via the computing device, the customer with an option to further optimize based upon a third optimization criteria selected by the customer from the plurality of optimization criteria and determining, via the computing device, a fourth optimized list including a route optimized for the third optimization criteria selected by the customer, and at least one alternative route that is less optimized for the third optimization criteria selected by the customer and having a significant marginal value in at least one other of the plurality of optimization criteria. As noted above the fourth list may be an optimization of the third list or completely newly generated based on the third criterion selected by the customer and secondarily optimized for one or the other of the first two optimization criteria.

## Claims

1. Apparatus for transporting cargo from an origin to a destination, including:
a computer system comprising a consignee terminal, shipping route calculating means, and a communications network linking said consignee terminal and said shipping route calculating means; and
transportation means directable by said shipping route calculating means for transporting cargo along a shipping route;
wherein the consignee terminal comprises:
I. means for sending to the shipping route calculating means, via the communications network, cargo shipment data representing at least an origin, a destination and a time for delivery;
II. means for receiving calculated shipment routes and additional preference criteria from the shipping route calculating means, via the communications network; and
III. means for indicating a selection of an additional preference criterion or of a shipment route to the shipping route calculating means, via the communications network;
wherein the shipping route calculating means comprises:
I. a memory storing data representing:
a) a plurality of shipment routes, including at least one portion of a shipment route representing shipment by air cargo;
b) a shipping criterion representative of transportation efficiency; and
c) a plurality of additional preference criteria;
II. means for receiving from the consignee terminal, via the communications network, cargo shipment data representing at least an origin, a destination and a time for delivery; and
III. processing means operable to:
a) retrieve data from said memory and to calculate a first list of alternative shipment routes from the origin to the destination on the basis of the shipping criterion;
b) provide to the consignee terminal, via the communications network, the first list of alternative shipment routes and said plurality of additional preference criteria;
c) receive from the consignee terminal, via the communications network, a first selection of either a shipment route from said first list, or one of the additional preference criteria;
d) when the first selection is a shipment route, direct the transportation means to transport the cargo from the origin to the destination in accordance with the selected shipment route;
e) when the first selection is a selection of one of the additional preference criteria:
i. determine a second list of alternative shipment routes for transporting the package from the origin to the destination on the basis of at least the selected additional preference criterion;
ii. provide to the consignee terminal, via the communications network, said second list of alternative shipment routes;
iii. receive from the consignee terminal, via the communications network, a selection of either a shipment route from said second list, or one of the additional preference criteria; and
iv. when the second selection is a shipment route, direct the transportation means to transport the cargo from the origin to the destination in accordance with the selected shipment route.

2. An apparatus according to claim 1, wherein the shipping criterion is based on time of delivery or greenness.

3. An apparatus according to claim 1 or claim 2, wherein the transportation means includes aircraft adapted to carry cargo, and wherein the cargo is transported on at least one portion of the shipment route by air.

4. An apparatus according to any of claims 1 to 3, wherein the processing means is operable to determine the second list of alternative shipment routes for transporting the package from the origin to the destination on the basis of the first list and the selected additional preference criterion.

5. An apparatus according to any of claims 1 to 4, wherein:
the processing means is further operable, in response to the second selection being a selection of a second one of the additional preference criteria, to;
determine a third list of alternative shipment routes for transporting the package from the origin to the destination on the basis of at least the selected second additional preference criterion; and
provide to the consignee terminal, via the communications network, said third list of alternative shipment routes;
and wherein in response to receiving from the consignee terminal a third selection of one of the alternative shipment routes in the third list, the processing means is further operable to direct the transportation means to transport the package from the origin to the destination in accordance with the shipment route selected from the third list.

6. An apparatus according to claim 5, wherein the processing means is operable to determine the third list of alternative shipment routes for transporting the package from the origin to the destination on the basis of the second list and the selected second additional preference criterion.

7. An apparatus according to claim 5 or claim 6, wherein:
the processing means is further operable, in response to the third selection being a selection of a second one of the additional preference criteria, to;
determine a fourth list of alternative shipment routes for transporting the package from the origin to the destination on the basis of at least the selected third additional preference criterion; and
provide to the consignee terminal, via the communications network, said fourth list of alternative shipment routes;
and wherein in response to receiving from the consignee terminal a fourth selection of one of the alternative shipment routes in the fourth list, the processing means is further operable to direct the transportation means to transport the package from the origin to the destination in accordance with the shipment route selected from the fourth list.

8. An apparatus according to claim 7, wherein the processing means is operable to determine the fourth list of alternative shipment routes for transporting the package from the origin to the destination on the basis of the third list and the selected third additional preference criterion.

9. A method of transporting cargo by a transportation means controlled by a computer system, wherein the computer system comprises a consignee terminal, shipping route calculating means including processing means and a memory for storing data, and a communications network linking the consignee terminal and the shipping route calculating means, and wherein the transportation means comprises land vehicles and aircraft directable by the shipping route calculating means for the transportation of cargo,
the method including the steps of:
sending from the consignee terminal to the shipping route calculating means, via the communications network, package shipment data for a package including at least an origin, a destination and a time for delivery of the package;
retrieving from the memory, by the shipping route calculating means:
a. route data for a plurality of shipment routes, including at least one portion of a shipment route representing shipment by air cargo; and
b. a shipping criterion representative of transportation efficiency;
calculating, in the shipping route calculating means, a first list of alternative shipment routes from the origin to the destination on the basis of the route data and the shipping criterion;
retrieving at least one additional preference criterion from the memory, by the shipping route calculating means;
sending from the shipping route calculating means to the consignee terminal, via the communications network, the calculated first list of shipment routes and the at least one additional preference criterion;
receiving at the shipping route calculating means from the consignee terminal, via the communications network, a first selection of:
i. a shipment route from the calculated first list of shipment routes; or
ii. one of the said at least one additional preference criteria; and if the first selection is a shipment route;
directing the transportation means, by the shipping route calculating means, to transport the package by from the origin to the destination in accordance with the selected shipment route from the first list;
and
if the first selection is an additional preference criterion;
determining, in the route calculating means, a second list of alternative shipment routes for transporting the package from the origin to the destination, based on at least the selected additional preference criterion;
sending from the route calculating means to the consignee terminal, via the communications network said second list of alternative shipment routes;
receiving at the shipping route calculating means from the consignee terminal, via the communications network, a second selection of:
i. a shipment route from the calculated second list of shipment routes; or
ii. a second one of the said at least one additional preference criteria; and
if the selection is a shipment route in the second list,
directing the transportation means, by the shipping route calculating means, to transport the package from the origin to the destination in accordance with the selected shipment route from the second list.

10. The method of claim 9, wherein the shipping criterion is based on time of delivery of the package, or on greenness of the shipment route.

11. The method of claim 9 or claim 10, wherein the second list of routes is prepared on the basis of the first list of routes and the selected additional preference criterion.

12. The method of any of claims 9 to 11 wherein the second selection received at the shipping route calculating means from the consignee terminal, via the communications network, is a second one of the said additional preference criteria;
and wherein the method further includes the steps of:
determining, in the route calculating means, a third list of alternative shipment routes for transporting the package from the origin to the destination, based on at least the second selected additional preference criterion;
sending from the route calculating means to the consignee terminal, via the communications network, said third list of alternative shipment routes;
receiving at the shipping route calculating means from the consignee terminal, via a communications network, a third selection of:
i. a shipment route from the calculated third list of shipment routes; or
ii. a third one of the said at least one additional preference criteria; and
if the third selection is a shipment route in the third list,
directing the transportation means, by the shipping route calculating means, to transport the package from the origin to the destination in accordance with the selected shipment route from the third list.

13. The method of claim 12, wherein the third list of routes is prepared on the basis of the second list of routes and the selected second additional preference criterion.

14. The method according to claim 12 or claim 13, wherein the third selection received at the shipping route calculating means from the consignee terminal, via the communications network, is a third one of the said additional preference criteria;
and wherein the method further includes the steps of:
determining, in the route calculating means, a fourth list of alternative shipment routes for transporting the package from the origin to the destination, based on at least the third selected additional preference criterion;
sending from the route calculating means to the consignee terminal, via the communications network, said fourth list of alternative shipment routes;
receiving at the shipping route calculating means from the consignee terminal, via a communications network, a fourth selection of:
i. a shipment route from the calculated fourth list of shipment routes; or
ii. a fourth one of the said at least one additional preference criteria; and
if the fourth selection is a shipment route in the fourth list,
directing the transportation means, by the shipping route calculating means, to transport the package from the origin to the destination in accordance with the selected shipment route from the fourth list.

15. The method of claim 14, wherein the fourth list of routes is prepared on the basis of the third list of routes and the selected third additional preference criterion.

16. The method of claim 14 or claim 15, wherein the fourth selection received at the shipping route calculating means from the consignee terminal, via the communications network, is a fourth one of the said additional preference criteria;
and wherein the method further includes the steps of:
determining, in the route calculating means, a fifth list of alternative shipment routes for transporting the package from the origin to the destination, based on at least the fourth selected additional preference criterion;
sending from the route calculating means to the consignee terminal, via the communications network, said fifth list of alternative shipment routes;
receiving at the shipping route calculating means from the consignee terminal, via a communications network, a fifth selection of:
i. a shipment route from the calculated fifth list of shipment routes; or
ii. a further one of the said at least one additional preference criteria; and
if the selection is a shipment route in the fifth list,
directing the transportation means, by the shipping route calculating means, to transport the package from the origin to the destination in accordance with the selected shipment route from the fifth list.

17. The method of claim 16, wherein the fifth list of routes is prepared on the basis of the fourth list of routes and the selected fourth additional preference criterion.

18. A machine readable medium bearing instructions that, when executed by a computing device, cause the computing device to perform a method according to any one of claims 9 to 17.
